# EUROPÄISCHE PATENTSCHRIFT

(11) **EP 2 524 421 B1**
(45) Veröffentlichungstag und Bekanntmachung des Hinweises auf die Patenterteilung: **23.03.2016**
(21) Anmeldenummer: 11703155.9
(22) Anmeldetag: 12.01.2011
(51) Int. Cl.: H02M 5/10, H01J 49/02, H02M 7/48

(54) **HOCHFREQUENZ (HF)-SPANNUNGS-VERSORGUNGSSYSTEM UND VERFAHREN ZUR VERSORGUNG EINES MULTIPOLMASSENSPEKTROMETERS MIT DER ZUR ERZEUGUNG EINES MULTIPOLFELDES VERWENDETEN HF-WECHSELSPANNUNG**
RADIO-FREQUENCY (RF) VOLTAGE SUPPLY SYSTEM AND METHOD FOR SUPPLYING A MULTIPOLE MASS SPECTROMETER WITH THE ALTERNATING RF VOLTAGE USED TO GENERATE A MULTIPOLE FIELD
SYSTÈME ET PROCÉDÉ D'ALIMENTATION EN TENSION À HAUTE FRÉQUENCE (HF) DESTINÉS À ALIMENTER UN SPECTROMÈTRE DE MASSE MULTIPOLAIRE AVEC LA TENSION ALTERNATIVE HF UTILISÉE POUR GÉNÉRER UN CHAMP MULTIPOLAIRE

(30) Priorität: 13.01.2010 DE 102010004649
(43) Veröffentlichungstag der Anmeldung: 21.11.2012
(73) Patentinhaber: Inprocess Instruments GmbH, 28201 Bremen (DE)
(72) Erfinder: THOMSEN, Klaus, 21509 Glinde (DE); KAPPELT, Rainer, 28199 Bremen (DE); REINERMANN, Rolf, 28237 Bremen (DE)
(74) Vertreter: Wasiljeff, Johannes M.B.
(86) Internationale Anmeldenummer: PCT/EP2011/050362
(87) Internationale Veröffentlichungsnummer: WO 2011/086108

(56) Entgegenhaltungen:
- DE-A1- 4 242 766
- JP-A- 2002 033 072
- US-A- 5 354 988
- US-A1- 2001 023 923
- US-A1- 2009 294 657

## Beschreibung

Die Erfindung betrifft ein Hochfrequenz (HF)-Spannungs-Versorgungssystem und ein entsprechendes Verfahren zur Versorgung eines Multipolmassenspektrometers, insbesondere Quadrupolmassenspektrometers, mit der zur Erzeugung eines Multipolfeldes, insbesondere Quadrupolfeldes, verwendeten HF-Wechselspannung.

Ein Multipolmassenspektrometer bzw. Quadrupolmassenspektrometer dient zum Nachweis von Ionen mit einem ausgewählten Verhältnis von ihrer Masse zu ihrer Ladung (m/e). Die Ionen werden von einer Ionenquelle freigesetzt und durchlaufen-nachfolgend das mittels der HF-Wechselspannung erzeugte Multipolfeld bzw. Quadrupolfeld, durch welches sie auf eine spiralartige Bahn gezwungen werden und schließlich auf einen Detektor treffen. Ionen mit einem hiervon abweichenden Masse-zu-Ladungs-Verhältnis werden zur Seite abgelenkt und verfehlen den Detektor, so dass eine Selektion von detektierbaren Ionenarten stattfindet.

Das Multipolfeld, insbesondere Quadrupolfeld, wird regelmäßig von mehreren, insbesondere vier, parallel zueinander angeordneten Stabelektroden erzeugt. Zur Erzeugung des Quadrupolfeldes wird an jeweils benachbarte Elektroden eine Gleichspannung und eine dieser Gleichspannung überlagerte hochfrequente HF-Wechselspannung angelegt, wobei an gegenüberliegenden Stabelektroden jeweils die gleiche elektrische Spannung anliegt. Es ergeben sich somit zwei Stabpaare von gegenüberliegenden Stäben, wobei eine jeweilige Spannung am zweiten Stabpaar gegenüber einer jeweiligen Spannung am ersten Stabpaar um 180 Grad phasenverschoben ist. Andere Multipolmassenspektrometer mit mehr oder weniger Stäben weisen ggf. andere Phasenverschiebungen benachbarter Stäbe auf.

Ein HF-Spannungs-Generator liefert regelmäßig sowohl die Gleichspannung als auch die HF-Wechselspannung an die Stabelektroden. Als HF-Wechselspannung wird eine Spannung von einigen hundert bis einigen tausend Volt mit einer Frequenz im Bereich von einigen Megahertz benötigt. Bekannt ist eine Ausbildung des HF-Spannungs-Generators als Resonanztransformator, wobei die HF-Wechselspannung in einem Sekundärkreis mittels eines magnetisch an den Sekundärkreis gekoppelten Primärkreises erzeugt wird. Zur Deckung eines Betriebsleistungsbedarfs ist nur eine geringe Wirkleistung, jedoch eine hohe Blindleistung erforderlich. Der Sekundärkreis ist ein Schwingkreis. Wenn der Schwingkreis auf Resonanz abgestimmt ist, ist ein Wirkleistungsbedarf minimal. Um Ionen mit einem unterschiedlichen Masse-zu-Ladungs-Verhältnis messen zu können, muss der HF-Spannungs-Generator ferner in einem weiten Amplitudenbereich einstellbar sein.

Der Primärkreis des HF-Transformators umfasst eine Spule, welche Spulen bzw. Teile einer Spule im Sekundärkreis anregt. Der Sekundärkreis bildet mit seinen Spulen in Verbindung mit einer Kapazität der Stäbe des Multipolsystems bzw. Quadrupolsystems, der Kapazität der elektrischen Zuleitungen und weiteren Kapazitäten den Schwingkreis.

Bekannte Resonanztransformatoren werden durch Einstellungen an den Kondensatoren im Sekundärkreis bzw. Änderungen der Kapazität oder durch Einstellen der Induktivität der Spulen auf Resonanz abgestimmt. Ein derartiges Abstimmen auf Resonanz erfolgt bereits vor bzw. bei der ersten Inbetriebnahme des Quadrupolmassenspektrometers und kann nachfolgend als Nachjustieren immer wieder notwendig werden, wenn Komponenten im Sekundärkreis sich ändern oder das kapazitive System sich aufgrund einer Temperaturabhängigkeit der Komponenten im Sekundärkreis ändert. Dies hat zur Folge, dass nach dem Stand der Technik der HF-Spannungs-Generator im Betrieb regelmäßig erst auf eine Betriebstemperatur gebracht wird, damit der Resonanztransformator nicht wiederholt abgestimmt werden muss.

Insbesondere eine Verstimmung des Schwingkreises wirkt sich auf die HF-Wechselspannung aus und erfordert einen erhöhten Wirkleistungsbedarf, wenn durch eine Amplitudenregelung auf einen Sollwert der HF-Wechselspannungsamplitude geregelt wird. Eine Folge ist eine Begrenzung der maximal einstellbaren HF-Wechselspannungsamplitude.

Für eine Messung mit dem Quadrupolmassenspektrometer wird ein konstantes Verhältnis der HF-Wechselspannungsamplitude zur überlagerten Gleichspannung gefordert. Um dieses Verhältnis und die Amplitude der HF-Wechselspannung konstant halten zu können, wird diese Amplitude daher in der Regel fortlaufend gemessen und zur Regelung der Leistungssteuerung einer Leistungsstufe des HF-Spannungs-Generators und zur Erzeugung der Gleichspannung verwendet.

Zur Nachregelung der HF-Wechselspannung im Sekundärkreis ist es bekannt, die HF-Wechselspannung abzugreifen, herunterzuteilen, gleichzurichten, mit einem Sollwert zu vergleichen und schließlich die HF-Endstufe entsprechend nachzuregeln. Das Gleichrichten muss dabei mit hoher Genauigkeit erfolgen, so dass bekannte Gleichrichtverfahren in der Regel mit hohem Schaltungsaufwand verbunden sind und eine aufwändige Korrektur von Messfehlern erfordern. Ein hierfür verwendeter sog. PID-Regler muss daher hochwertig dimensioniert und mit Bauteilen hoher Güte versehen sein. Die Anpassung der Regelparameter erfordert viele Stellglieder.

Aus JP 2002/033072 A ist ein HF-Spannungs-Generator für ein Quadrupolmassenspektrometer bekannt, bei dem eine HF-Spannung variabler Frequenz mittels eines digital einstellbaren HF-Oszillators erzeugt wird. Eine Einhüllende der HF-Spannung wird detektiert und mit einer Sägezahnspannung verglichen. In Erwiderung hierauf wird ein Fehler ermittelt, der als Variable in eine digitale PID-Regelung eingeht. Nach einer Digital-Analog-Umsetzung wird diese Variable zur Regelung der Spannung verwendet.

Bei diesem bekannten HF-Spannungs-Generator ist ferner ein Modus vorgesehen, in welchem nicht gemessen wird, sondern ein Resonanzabgleich erfolgt. Hierzu wird das Einregeln der Amplitude unterdrückt und nach einer Frequenz gesucht, für die eine maximale Amplitude im Primärkreis erreichbar ist.

Aus US 2001/0023923 ist ein Hochfrequenz-Spannungs-Versorgungssystem bekannt, bei dem der Sekundärkreis zunächst mechanisch oder durch Änderung des Wicklungsverhältnisses von Spulen auf Resonanz zum Primärkreis abgestimmt wird. Nachfolgend wird lediglich analog die Amplitude der Wechselspannung im Sekundärkreis gemessen, analog mit einem ebenfalls analogen Sollwert verglichen und dadurch eine Regelgröße bzw. ein analoger Ist-HF-Spannungswert bestimmt und zur Nachregelung der Wechselspannungsamplitude im Primärkreis verwendet. Eine Nachregelung auf Resonanz findet nicht statt.

Ferner ist aus DE 42 42 766 A1 ein Quadrupolmassenfilter bekannt, das ebenfalls nicht auf Resonanz nachgeregelt wird. Stattdessen wird bspw. mittels eines digitalen Frequenzzählers die Frequenz der Wechselspannung im Primärkreis gemessen und als Stellgröße für die Wechselspannungsamplitude im Sekundärkreis verwendet.

Aus US 2009/0294657 A1 ist eine Spannungsversorgung für ein Massenspektrometer anderer Bauart, nämlich ein lonenfallen-Massenspektrometer, bekannt, wobei eine Wechselspannung erzeugt und derart nachgeregelt wird, dass der Leistungsbedarf minimal wird.

US 5,354,988 A offenbart eine Spannungsversorgung für ein Multipol-Massenfilter, mit einer zur Erzeugung eines Quadrupolfeldes verwendeten HF-Wechselspannung in einem mittels eines Primärkreises angeregten Sekundärkreis, aufweisend
- einen HF-Spannungs-Generator mit einem Synthesizer ausgebildet zum quarzgenauen Einstellen und Halten der Frequenz einer Wechselspannung im Primärkreis gemäß einem jeweiligen Frequenzwert, wobei der HF-Spannungs-Generator Frequenznachregelmittel aufweist, ausgebildet zum Ermitteln des Resonanzfalls des Sekundärkreises oder einer Abweichung vom Resonanzfall und zum automatischen Nachregeln der Frequenz der Wechselspannung im Primärkreis im Falle einer Abweichung vom Resonanzfall derart, dass der Resonanzfall wiederhergestellt wird und somit der Sekundärkreis durch Nachregelung der Frequenz der Wechselspannung im Primärkreis auf Resonanz gehalten wird,
- eine HF-Spannungs-Messvorrichtung zum Abtasten der HF-Wechselspannung im Sekundärkreis.

Die Amplitude der Wechselspannung im Primärkreis wird mittels eines analogen Signals in Abhängigkeit von einer gemessenen Frequenz im Primärkreis, von einer analog gemessenen Ist-Amplitude im Sekundärkreis und von einer vorgegebnen Soll-Amplitude eingestellt.

Alle diese Anordnungen und Verfahren für die HF-Spannungsversorgung zur Erzeugung eines Quadrupolfeldes in einem Quadrupolmassenspektrometer sind technisch aufwendig herzustellen und zu betreiben, erfordern zumeist Bauteile hoher Güte, einen hohen Schaltungsaufwand und aufwendige Fehlerkorrekturmaßnahmen.

Der Erfindung liegt daher ausgehend von US 5,354,988 A die Aufgabe zugrunde, eine präzise HF-Spannungsversorgung, die flexibel für Multipolmassenspektrometer mit unterschiedlichen Stabsystemen für Messungen in einem erweiterten Dynamikbereich einsetzbar ist und dabei ein Erreichen und stabiles Halten der Wechselspannungsamplitude im Sekundärkreis ermöglicht, mit einfachen Mitteln bereitzustellen.

Die Erfindung löst diese Aufgabe mit einem HF-Spannungs-Versorgungssystem nach Anspruch 1 und mit einem HF-Spannungs-Versorgungsverfahren nach Anspruch 10.

Das HF-Spannungs-Versorgungssystem weist eine HF-Spannungs-Messvorrichtung, eine Rechenvorrichtung und einen HF-Spannungs-Generator auf. Begriffe wie "eine" oder "einen" sind hier wie an anderen Stellen der Beschreibung und in den Ansprüchen nicht als Zahlwörter sondern als unbestimmte Artikel zu verstehen.

Der HF-Spannungs-Generator weist einen Synthesizer auf, der die Frequenz im Primärkreis quarzgenau einstellt und hält.

Ferner weist der HF-Spannungs-Generator Frequenznachregelmittel auf. Die Frequenznachregelmittel regeln die Frequenz automatisch derart nach, dass der Schwingkreis, insbesondere durch Anregung des Primärkreises, auf Resonanz gehalten wird. Im Falle einer Abweichung

vom Resonanzfall wird die Frequenz zur Wiederherstellung des Resonanzfalls durch ein Nachjustierverfahren automatisch nachgeregelt.

Bevorzugt erkennen die Frequenznachregelmittel in jedem Fall so rechtzeitig eine minimale Verstimmung des Sekundärkreises bzw. Abweichung von der Resonanzfrequenz und wirken dieser minimalen Verstimmung durch entsprechende Nachregelung entgegen, dass Messungen mit dem Multipolmassenspektrometer immer im Wesentlichen im Resonanzfall durchgeführt werden können.

Die HF-Spannungs-Messvorrichtung ist erfindungsgemäß als Digital-Spannungsmessgerät ausgebildet, tastet die HF-Wechselspannung im Sekundärkreis ab und bestimmt einen von dieser HF-Wechselspannung abhängigen digitalen Messwert, der aufgrund der Ausbildung als Digital-Spannungs-Messgerät ein digitaler absoluter Ist-HF-Spannungswert ist. Es wird somit nicht nur ein relativer Vergleichswert, sondern die tatsächliche Spannung ermittelt. Aufgrund der Ausbildung als Digital-Spannungsmessgerät kann der Ist-HF-Spannungswert gegenüber einer analogen Messvorrichtung sehr genau ermittelt werden und liegt digital vor. Eine stattdessen nachgeschaltete Digitalisierung würde hingegen zu Ungenauigkeiten führen. Der erfindungsgemäß ermittelte Ist-HF-Spannungswert weist diese Ungenauigkeiten nicht auf.

Die Rechenvorrichtung bestimmt unter Heranziehung des digitalen Messwerts bzw. des Ist-HF-Spannungswerts einen digitalen Wechselspannungsamplitudeneinstellwert. Dieser Wechselspannungsamplitudeneinstellwert ist, insbesondere im Gegensatz zum Stand der Technik, nicht bloß ein Fehlerwert, der sich aus der Abweichung eines Ist-Werts von einem Soll-Wert ergäbe. Bei der Erfindung ermittelt die Rechenvorrichtung den digitalen Wechselspannungsamplitudeneinstellwert in Abhängigkeit von dem tatsächlichen Ist-HF-Spannungswert, in weiterer Abhängigkeit von einem Soll-HF-Spannungswert und in weiterer Abhängigkeit von einem Frequenzwert der Wechselspannung im Primärkreis. Der Soll-HF-Spannungswert ist dabei wie der Ist-HF-Spannungswert ein absoluter Spannungswert, der wie der Frequenzwert auch digital vorliegt. Dabei ist der Soll-HF-Spannungswert bevorzugt einer jeweils zu detektierenden Masse zugeordnet. Insbesondere können mit unterschiedlichen Soll-HF-Spannungswerten Ionen mit unterschiedlicher Masse bzw. einem unterschiedlichen Masse-zu-Ladungs-Verhältnis detektiert werden.

Die Rechenvorrichtung zieht zur Berechnung des Wechselspannungsamplitudeneinstellwerts zusätzlich den Stabradius einer stabförmigen Elektrode des Multipol- bzw. Quadrupolmassenspektrometers oder den Feldradius des Multipol- bzw. Quadrupolfeldes heran, wobei der Stabradius, insbesondere in dem Fall, dass die Elektrode eine zylindrische stabförmige Elektrode ist, in einem festen Verhältnis, insbesondere von 1,144:1, zum Feldradius steht.

Die Rechenvorrichtung ist derart ausgebildet, dass sie bekannte Zusammenhänge zwischen einer Frequenzänderung und einer Änderung des Ist-HF-Spannungswerts kennt und berücksichtigt. In Verbindung mit einem digital vorliegenden Frequenzwert der dem HF-Generator zum Einstellen der Wechselspannung im Primärkreis und damit mittelbar zum Einstellen der HF-Wechselspannung im Sekundärkreis bereitgestellt wird, berechnet die Rechenvorrichtung daher in Erwiderung auf eine Frequenzänderung der Spannung im Primärkreis einen neuen Wechselspannungsamplitudeneinstellwert für eine gewählte Masse bzw. ein gewähltes Masse-zu-Ladungs-Verhältnis (m/e) in Abhängigkeit dieses Frequenzwerts der Spannung im Primärkreis. Der Wechselspannungsamplitudeneinstellwert bzw. ein danach eingestellter neuer Wert der Wechselspannungsamplitude im Primärkreis wird zugleich an eine Leistungsstufe des HF-Spannungs-Generators geliefert. Dies hat zur Folge, dass sich trotz der Frequenzänderung die Skalierung einer Massenskala von Massen zu detektierender Ionen nicht oder zumindest kaum ändert. Insbesondere besteht ein linearer Zusammenhang zwischen der HF-Wechselspannungsamplitude und der Massenskala.

Der HF-Spannungs-Generator stellt die HF-Wechselspannung mit einer in Abhängigkeit vom Wechselspannungsamplitudeneinstellwert eingestellten HF-Wechselspannungsamplitude bereit. Der HF-Spannungs-Generator stellt dabei eine gewünschte Frequenz quarzgenau ein und hält diese Frequenz auch quarzgenau, d.h. mit einer Genauigkeit, die von Schwingvorgängen eines Quarzes bereitgestellt wird.

Die Frequenz, mit welcher der HF-Spannungs-Generator den Primärkreis speist, ist genau die Frequenz, die von der Rechenvorrichtung digital für die dort durchgeführten Berechnungen verarbeitet wird. Es muss daher nicht erst ein Frequenzwert der HF-Wechselspannung gemessen und der Rechenvorrichtung bereitgestellt werden, sondern ein Frequenzwert wird zeitnah von der Rechenvorrichtung verarbeitet, so dass im Wesentlichen zeitgleich die Frequenz und der Wechselspannungsamplitudeneinstellwert geändert werden können und die Skalierung der Massenskala erhalten bleibt.

Das HF-Spannungs-Versorgungssystem bzw. der HF-Spannungs-Generator weist des Weiteren vorzugsweise Frequenzbereitstellungsmittel auf, mittels denen die aktuell eingestellte Frequenz digital der Rechenvorrichtung bereitgestellt wird. Ggf. kann die Frequenz direkt vom Synthesizer an die Rechenvorrichtung oder umgekehrt von der Rechenvorrichtung an den Synthesizer bzw. den HF-Spannungs-Generator übertragen werden. In jedem Fall wird eine gemeinsame Frequenz sowohl von der Rechenvorrichtung für die dort vorgenommenen Berechnungen herangezogen als auch am HF-Spannungs-Generator im Primärkreis eingestellt. Die Rechenvorrichtung zieht die Frequenz zur Bestimmung des Wechselspannungsamplitudeneinstellwertes heran.

Die Erfindung ermöglicht somit ein schnelles und präzises Nachregeln des Ist-HF-Spannungswerts im Falle einer Frequenzänderung sowie aufgrund der vollständig digitalen Regelstrecke ein Anpassen von Regelparametern mit geringem Aufwand. Insbesondere wird nach bzw. bei einem Resonanzabgleich, der bspw. aufgrund einer thermisch bedingten Änderung der Induktivität und/oder Kapazität im Schwingkreis erforderlich wird, nicht nur eine neue Frequenz sondern auch eine neue HF-Wechselspannungsamplitude und vorzugsweise auch eine neue Gleichspannungsamplitude im Sekundärkreis bzw. Schwingkreis bzw. wenigstens ein zu ihrer Erzielung notwendiger Einstellwert berechnet.

In einer bevorzugten Weiterbildung zieht die Rechenvorrichtung auch zur Berechnung des Gleichspannungsamplitudeneinstellwerts zusätzlich den Stabradius einer stabförmigen Elektrode des Multipol- bzw. Quadrupolmassenspektrometers oder den Feldradius des Multipol- bzw. Quadrupolfeldes heran.

Die Erfindung benötigt als Referenz keine Eichsubstanzen. Aufgrund des hoch präzise digital gemessenen Wechselspannungswerts im Sekundärkreis bietet die Erfindung Massenlinearität über den gesamten Massenbereich. Somit kann für beliebige Massen in Abhängigkeit von der jeweiligen Frequenz der Wechselspannung im Primärkreis ein geeigneter Wechselspannungsamplitudeneinstellwert errechnet und bereitgestellt werden.

Der Resonanzfall bzw. eine Verstimmung des Schwingkreises als Abweichung vom Resonanzfall kann auf unterschiedliche Weise ermittelt werden:
In einer Ausführungsform der Erfindung wird als Abgleichkriterium für einen zu ermittelnden Resonanzfall eine Frequenz von mehreren Frequenzen als Resonanzfrequenz detektiert, für welche die HF-Wechselspannungsamplitude im Sekundärkreis bzw. Schwingkreis und/oder die Wechselstromamplitude im Primärkreis, insbesondere im Falle des Festhaltens der Wechselspannungsamplitude im Primärkreis, gegenüber anderen Frequenzen maximal ist. Dazu wird ein Frequenzbereich mit mehreren naheliegenden Frequenzen um einen Erwartungswert der zu bestimmenden Resonanzfrequenz herum definiert und die Frequenz innerhalb dieses Frequenzbereichs variiert. Während die maximale HF-Wechselspannungsamplitude gesucht wird sowie ggf. während die maximale Wechselstromamplitude im Primärkreis gesucht wird, wird die Wechselspannungsamplitude im Primärkreis vorübergehend festgehalten bzw. der Amplitudenregelkreis vorübergehend abgetrennt.

Beispielsweise werden mehrere Ist-HF-Spannungswerte im Schwingkreis bzw. Wechselstromwerte im Primärkreis für unterschiedliche Frequenzen, jedoch für gleiche Wechselspannungsamplitudeneinstellwerte miteinander verglichen. Alternativ können die Ist-HF-Spannungswerte dabei weiterhin in Richtung des Soll-HF-Spannungswerts nachgeregelt werden, wobei von den hierfür notwendigen Wechselspannungsamplitudeneinstellwerten auf den Resonanzfall geschlossen bzw. eine Verstimmung des Sekundärkreises erkannt wird. Die maximale Amplitude stellt sich im Resonanzfall ein. Die bei der maximalen Amplitude vorliegende Frequenz wird als Resonanzfrequenz gespeichert und für das weitere Verfahren bereitgestellt. Wenn dagegen kein Spannungsmaximum ermittelt wird, wird dies als Störungsfall erkannt und eine Fehlerroutine ausgegeben.

In einer hierzu alternativen Ausführungsform der Erfindung wird der Resonanzfall bzw. eine Verstimmung des Sekundärkreises relativ zum Primärkreis alternativ oder zusätzlich mittels Phaseninformationen bzw. mittels einer Phasenbeziehung ermittelt. Hierfür weisen die Frequenznachregelmittel Phasendetektionsmittel auf, die wiederholt Phaseninformationen bzw. eine Phasenbeziehung ermitteln, während ein Frequenzbereich durchfahren wird, der zuvor um einen Erwartungswert der zu bestimmenden Resonanzfrequenz herum definiert wird.

In einer ersten Variante wird eine Phasenbeziehung zwischen der Wechselspannung im Sekundärkreis und dem Wechselstrom im Primärkreis ermittelt. Die Phasenbeziehung wird dabei bspw. dadurch festgestellt, dass ein Maximalwert der Wechselspannung im Sekundärkreis mit einem Minimalwert des Wechselstroms im Primärkreis in Beziehung gesetzt wird. Die Frequenz, bei welcher der Maximalwert der Wechselspannung mit dem Minimalwert des Wechselstroms zusammenfällt bzw. bei der die Phasenverschiebung 90° beträgt, wird als Resonanzfrequenz erkannt, bei welcher der Primärkreis auf Resonanz zum Sekundärkreis abgestimmt ist und ein Nachregeln der Frequenz nicht erforderlich ist. Wenn jedoch der Resonanzfall nicht vorliegt, wird aus der detektierten Phasenverschiebung eine erforderliche Abstimmungsrichtung ermittelt, in welche nachfolgend die Frequenz zum Erreichen der Resonanzfrequenz verändert wird. Wenn beispielsweise der Maximalwert der Wechselspannung dem Minimalwert des Wechselstroms um mehr als ein vorbestimmter Verschiebungswert vorauseilt, wird dies als Verstimmung des Sekundärkreises relativ zum Primärkreis erkannt. Die Frequenznachregelmittel erhöhen in Erwiderung hierauf die Frequenz, mit welcher der Primärkreis angeregt wird. In dem anderen Fall, dass der Minimalwert des Wechselstroms dem Maximalwert der Wechselspannung um mehr als einen vorbestimmten Verschiebungswert vorauseilt, wird wiederum eine Verstimmung des Sekundärkreises relativ zum Primärkreis erkannt. In diesem Fall erniedrigen die Frequenznachregelmittel jedoch die Frequenz, um wieder den Resonanzfall zu erhalten.

In einer zweiten Variante wird eine Phasenbeziehung zwischen der Wechselspannung im Sekundärkreis und dem Wechselstrom im Sekundärkreis ermittelt. Die Frequenz, bei der die Phasenverschiebung 0° beträgt, wird als Resonanzfrequenz erkannt, bei welcher der Primärkreis auf Resonanz zum Sekundärkreis abgestimmt ist und ein Nachregeln der Frequenz nicht erforderlich ist. Aus einer von 0° abweichenden Phasenverschiebung kann eine erforderliche Abstimmungsrichtung ermittelt werden, in welche die Frequenz zum Erreichen des Resonanzfalls verändert werden muss. Die Frequenznachregelmittel erhöhen bzw. erniedrigen folglich entsprechend der ermittelten Abstimmungsrichtung die Frequenz, mit welcher der Primärkreis angeregt wird.

Vorzugsweise ist das HF-Spannungs-Versorgungssystem derart ausgebildet, dass der Resonanzabgleich während einer Messung mit dem Quadrupolmassenspektrometer automatisch aussetzt. Alternativ oder zusätzlich kann ein manuelles Aussetzen vorgesehen sein. Dadurch ist gewährleistet, dass sich die Bedingungen im Quadrupolmassenspektrometer während einer Messung im Wesentlichen nicht ändern. Der HF-Generator hält dabei quarzgenau die eingestellte bzw. eingeregelte Frequenz. Eine relevante Abweichung vom Resonanzfall ist dabei nicht zu erwarten, da sich während eines Messzeitraums allenfalls so geringe Verstimmungen des Sekundärkreises ergeben könnten, die keiner Nachregelung der Frequenz bedürfen.

Gemäß einer bevorzugten Ausführungsform zieht die Rechenvorrichtung die digital der Rechenvorrichtung bereitgestellte Frequenz auch zur Bestimmung eines Gleichspannungsamplitudeneinstellwerts heran. Insbesondere liefert die Rechenvorrichtung zwei separate Gleichspannungsamplitudeneinstellwerte für die positive und negative Gleichspannung, mit der ein erstes bzw. zweites Stabelektrodenpaar beaufschlagt wird.

In einer bevorzugten Ausführungsform weist die Messvorrichtung einen HF-Spannungsteiler auf, der die abgetastete HF-Wechselspannung von einer überlagerten Gleichspannung trennt und auf eine niedrigere, direkt messbare Spannung, bevorzugt in einem Verhältnis bzw. Gesamtteilerverhältnis zwischen 100:1 und 5000:1 herunterteilt. Der HF-Spannungsteiler umfasst bevorzugt mehrere Teiler, deren jeweilige Teilverhältnisse zu dem Gesamtteilverhältnis des HF-Spannungsteilers zusammenwirken.

Der HF-Spannungsteiler ist bevorzugt als kapazitiver Teiler, besonders bevorzugt als kapazitiver Doppelteiler ausgebildet, der die abgetastete HF-Wechselspannung in einem ersten Schritt in einem ersten Verhältnis und in einem zweiten Schritt in einem zweiten Verhältnis herunterteilt. Das erste Verhältnis beträgt bevorzugt zwischen 25:1 und 35:1, besonders bevorzugt im Wesentlichen 30:1. Das zweite Verhältnis beträgt bevorzugt ebenfalls zwischen 25:1 und 35:1, besonders bevorzugt im Wesentlichen 30:1. Dadurch wird die Spannung mit hoher Genauigkeit auf eine leicht messbare Spannung heruntergeteilt, von der nach deren Messung wiederum leicht mit großer Genauigkeit auf die ursprüngliche HF-Wechselspannung geschlossen werden kann.

In einer bevorzugten Ausführungsform umfassen die Messwertbestimmungsmittel einen Analog-Digital (A/D)-Wandler. Der A/D-Wandler ermöglicht eine Digitalisierung des abgegriffenen Signals mit hoher Genauigkeit vor einer Weiterverarbeitung des Signals. Der digitale Messwert geht deshalb als Eingangsgröße in eine komplizierte Regelkette ein, die vollständig digital und daher dennoch mit einfachen Mittel realisiert sein kann.

Der A/D-Wandler ist derart ausgebildet, dass ein Abtasttakt, mit dem die messbare Spannung abgetastet wird, in einem festen Verhältnis zur Frequenz im Sekundärkreis gehalten wird und eine konstante Zwischenfrequenz unabhängig von der Resonanzfrequenz gehalten wird. Dadurch wird eine konstante Anzahl von Messwerten pro Amplitude bereitgestellt, wobei die Messwerte vorteilhaft fortlaufend als Eingangsgrößen für Berechnungen der Rechenvorrichtung bereitgestellt werden.

Vorzugsweise ermittelt die Rechenvorrichtung nicht nur den HF-Wechselspannungsamplitudeneinstellwert sondern zusätzlich einen Gleichspannungsamplitudeneinstellwert zum Einstellen der Gleichspannungsamplitude der Gleichspannung, die von der HF-Wechselspannung überlagert wird. Für die Berechnung des Gleichspannungsamplitudeneinstellwerts zieht die Rechenvorrichtung bevorzugt den Ist-HF-Spannungswert und den Soll-HF-Spannungswert der HF-Wechselspannung heran. Ferner zieht die Rechenvorrichtung zusätzlich den Frequenzwert für die Berechnung des Gleichspannungsamplitudeneinstellwerts heran, wobei vorzugsweise für einen positiven und einen negativen HF-Spannungswert jeweils ein Gleichspannungsamplitudeneinstellwert ermittelt wird.

Die mittels des Wechselspannungsamplitudeneinstellwerts einstellbare HF-Wechselspannungsamplitude und/oder die mittels des Gleichspannungsamplitudeneinstellwerts einstellbare Gleichspannungsamplitude wird dabei erfindungsgemäß aus bekannten Wirkzusammenhängen im Multipol- bzw. Quadrupolmassenspektrometer berechnet. Insbesondere verwendet die Erfindung Formeln bzw. Gleichungen, die auf dem im Jahre 1953 von Paul veröffentlichten Messprinzip des Quadrupolmassenspektrometers beruhen. Mittels der bekannten Wirkzusammenhänge bzw. mittels dieser Formeln wird der Wechselspannungsamplitudeneinstellwert bzw. Gleichspannungsspannungsamplitudeneinstellwert berechnet und bspw. im Falle einer Frequenzänderung auf einfache Weise schnell neu berechnet.

Vorzugsweise stellt die Rechenvorrichtung eine Regelung, insbesondere DPID-Regelung, mit zumindest dem Ist-HF-Spannungswert und dem Frequenzwert als Eingangsgrößen und dem Wechselspannungsamplitudeneinstellwert als Ausgangsgröße bereit. Die DPID Regelung umfasst dabei zwei Differenzglieder (D), einen proportionalen Anteil der Verstärkung (P) und ein integrierendes Regelglied (I).

Weitere Ausführungsformen ergeben sich aus den Ansprüchen sowie aus dem anhand der Zeichnungen näher erläuterten Ausführungsbeispiel. In der Zeichnung zeigen:
- Fig, 1: ein Schaltbild eines HF-Spannungs-Versorgungssystems gemäß einem Ausführungsbeispiel der Erfindung und

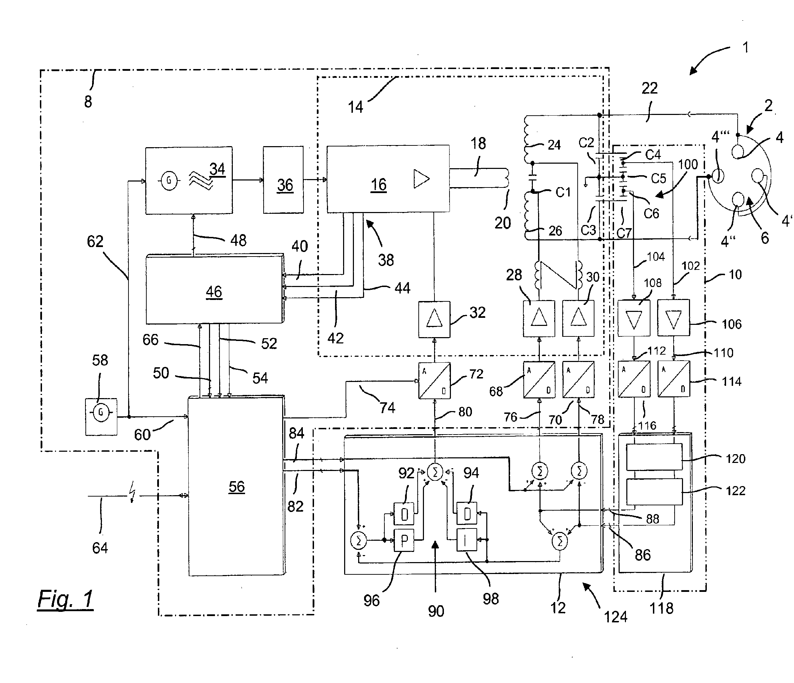

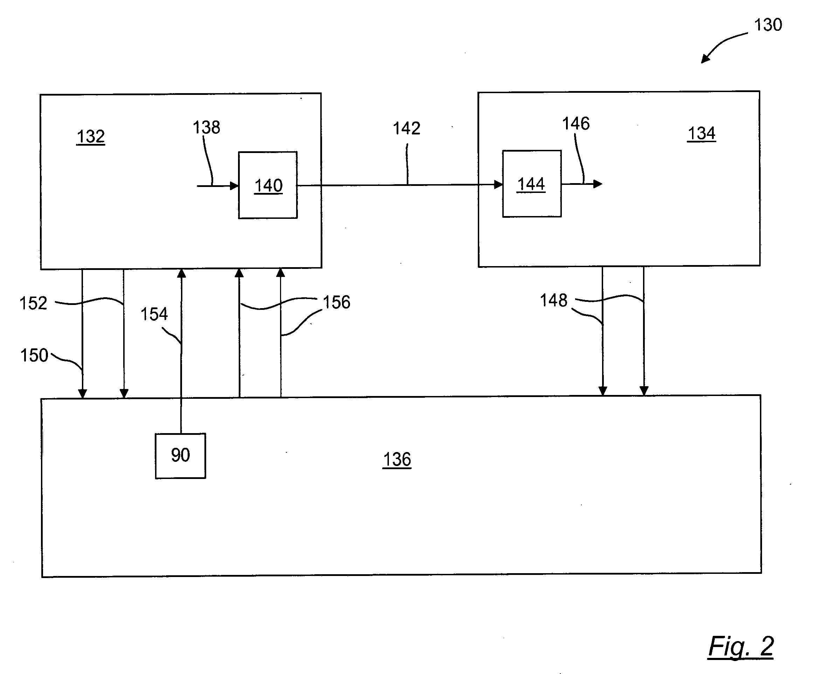

- Fig. 2: ein vereinfachtes Blockdiagramm zur ergänzenden Veranschaulichung der wichtigsten Verfahrensschritte eines mittels des HF-Spannungs-Versorgungssystems von Fig. 1 durchführbaren Verfahrens.

Fig. 1 zeigt ein HF-Spannungs-Versorgungssystem 1 gemäß einem Ausführungsbeispiel der Erfindung nebst einer vom HF-Spannungs-Versorgungssystem 1 mit einer HF-Wechselspannung versorgbaren Quadrupolanordnung 2. Die Quadrupolanordnung 2 ist Teil eines Quadrupolmassenspektrometers, das zum Nachweis von Ionen mit einem ausgewählten Masse-zu-Ladungs-Verhältnis eingesetzt werden kann. Die Quadrupolanordnung 2 weist vier parallel zueinander angeordnete, zylindrische stabförmige Elektroden 4, 4', 4" und 4"' auf. Dabei sind die jeweils gegenüberliegenden Elektroden 4 und 4" als erstes Elektrodenpaar sowie 4' und 4"' als zweites Elektrodenpaar miteinander verschaltet und liegen daher paarweise auf gleichem Potential. Zwischen den Elektrodenpaaren bildet sich bei Beaufschlagung mit einer HF-Wechselspannung ein Quadrupolfeld 6 aus. Das Quadrupolfeld 6 weist einen Feldradius r₀ auf. Die Elektroden 4, 4', 4" und 4"' weisen einen Stabradius r auf, der vorzugsweise dem 1,144-fachen Wert des Feldradius r₀ beträgt, da das Quadrupolfeld, das eigentlich mittels hyperbolischer Elektroden erzeugt werden müsste auf diese Weise von den zylindrischen Elektroden 4, 4', 4" und 4"' vergleichsweise gut nachgebildet wird.

Das HF-Spannungs-Versorgungssystem 1 weist einen HF-Spannungs-Generator 8 auf, der die HF-Wechselspannung für die Quadrupolanordnung 2 erzeugt. Ferner weist das HF-Spannungs-Versorgungssystem 1 eine HF-Spannungs-Messvorrichtung 10 zum Messen der an der Quadrupolanordnung 2 anliegenden Wechselspannung auf. Schließlich weist das HF-Spannungs-Versorgungssystem 1 eine Rechenvorrichtung 12 auf, welche verschiedene Messwerte bzw. Vorgabewerte erhält, diese Werte nach bestimmten Rechenregeln verarbeitet und schließlich aus dieser Verarbeitung erhaltene Werte an den HF-Spannungs-Generator 8 liefert, der in Abhängigkeit von diesen Werten die HF-Wechselspannung für die Quadrupolanordnung 2 erzeugt.

Der HF-Spannungs-Generator 8 weist HF-Wechselspannungsbereitstellungsmittel 14 auf. Die HF-Wechselspannungsbereitstellungsmittel 14 umfassen eine Leistungsstufe 16, welche eine Wechselspannung generiert und einem ebenfalls - den HF-Wechselspannungsbereitstellungsmitteln 14 zugehörigen Primärkreis 18 bereitstellt. Im Primärkreis 18 ist eine Spule 20 als Primärspule angeordnet.

Mittels der Spule 20 wird ein Sekundärkreis 22 angeregt, der die HF-Wechselspannung führt. Hierzu weist der Sekundärkreis 22 zwei Spulen 24 und 26 als Sekundärspulen auf. Ferner weist der Sekundärkreis 22 Kapazitäten C1, C2 und C3 auf. Die Quadrupolanordnung 2 sowie verbindende Leiter gehören ebenfalls zum Sekundärkreis 22. Die elektrischen Leitungen und die Elektroden 4, 4', 4" und 4"' bilden zusammen mit den Kapazitäten C1, C2 und C3 die kapazitiven Komponenten des Sekundärkreises 22.

Der Gleichspannungsanteil in der HF-Wechselspannung im Sekundärkreis 22 wird von Spannungsversorgungen 28 und 30 geliefert. Die Spannungsversorgungen 28 und 30 werden dabei bspw. mit einer positiven und einer negativen Gleichspannung von 420 Volt versorgt und liefern ihrerseits eine einstellbare positive bzw. negative Gleichspannung von bspw. 400 Volt.

Eine weitere Spannungsversorgung 32 wird bspw. mit einer Spannung von 48 Volt bei einer Leistung von 40 Watt versorgt und liefert eine einstellbare Spannung an die Leistungsstufe 16, so dass mittels der Spannungsversorgung 32 die Amplitude der Wechselspannung im Primärkreis 18 geregelt werden kann.

Die Amplitude der HF-Wechselspannung im Sekundärkreis 22 ist von der Amplitude der Wechselspannung im Primärkreis 18 abhängig. Nach Überlagerung mit dem Gleichspannungsanteil liefert der Sekundärkreis 22 schließlich eine positive bzw. negative Spannung von bspw. bis zu 1.800 Volt an die Elektroden 4 und 4" bzw. 4' und 4"'.

Die Amplitude der HF-Wechselspannung im Sekundärkreis 22 wird maximal, wenn der Sekundärkreis 22 vom Primärkreis 18 auf seiner Resonanzfrequenz angeregt wird. Die Resonanzfrequenz des Sekundärkreises 22 hängt im Wesentlichen von den Kapazitäten der Stecker, der Kabel und des Quadrupols bzw. der Quadrupolanordnung 2 sowie von den Induktivitäten der Spulen 24 und 26 ab.

Traditionell sind deshalb oft die o.g. Kapazitäten C1, C2 und C3 parallel zu den Induktivitäten der Spulen 24 und 26 vorhanden, um durch ein Einstellen an den Kapazitäten C1, C2 und C3 und/oder eine Veränderung der Leitungskapazitäten mittels Änderung der Leitungslänge Resonanz herstellen zu können, wenn der Sekundärkreis 22 verstimmt ist. Alternativ oder zusätzlich wird bei bekannten Verfahren die Induktivität des Schwingkreises 22 verändert, insbesondere durch Verändern der Windungsanzahl der Spulen 24 und 26, durch Einbringen von Kurzschlusswindungen oder ferromagnetisches bzw. diamagnetisches Material in die Spulen 24 und 26 oder durch Verwendung von Transduktoren. Alle diese bekannten Verfahren erfordern einen hohen mechanischen Aufwand und verschlechtern dennoch die Stabilität des Schwingens des Schwingkreises 22 auf Resonanz zum Primärkreis 18 bzw. die Stabilität des Resonanzkreises.

Bei der Erfindung erfolgt das Einstellen auf Resonanzfrequenz hingegen nicht mechanisch sondern elektronisch durch entsprechende Anregung des Primärkreises 18 bzw. durch Regelung der Frequenz der Wechselspannung im Primärkreis 18. Hierfür weist der HF-Spannungs-Generator 8 einen Synthesizer 34, der insbesondere als programmierbarer Phasenakkumulator ausgebildet ist, auf. Der Synthesizer 34 erzeugt und hält eine eingestellte Frequenz quarzgenau und liefert diese eingestellte Frequenz über eine Treiberstufe 36 an die Leistungsstufe 16, so dass die Frequenz der Wechselspannung im Primärkreis 18 gemäß der vom Synthesizer 34 eingestellten Frequenz eingestellt wird.

Zum Abstimmen auf Resonanzfrequenz ermittelt das HF-Spannungs-Versorgungssystem 1 im gezeigten Ausführungsbeispiel eine Phasenbeziehung zwischen der Spannung im Sekundärkreis 22 und dem Strom im Primärkreis 18. Insbesondere ist der Sekundärkreis 22 auf Resonanz abgestimmt, wenn ein Maximalwert der Wechselspannung im Sekundärkreis 22 mit einem Minimalwert des Wechselstroms im Primärkreis 18 zusammenfällt. Alternativ können andere Werte des Stroms bzw. der Spannung miteinander in Beziehung gesetzt werden, bspw. Flanken des Wechselstroms und der Wechselspannung betrachtet und miteinander in Beziehung gesetzt werden. In jedem Fall weist der HF-Spannungs-Generator dabei Phasendetektionsmittel 38 auf, die bspw. im Bereich der Leistungsstufe 16 Phaseninformationen bzw. eine Phasenbeziehung zwischen dem Strom im Primärkreis 18 und der Spannung im Sekundärkreis 22 ermitteln und diese Phaseninformationen bzw. Informationen über die Phasenbeziehung digital über Datenleitungen 40 und 42 ggf. zusammen mit Temperaturdaten über eine weitere Datenleitung 44 an Frequenznachregelmittel 46 übermitteln.

Alternativ oder zusätzlich zu dem beschriebenen Ausführungsbeispiel kann die Resonanzfrequenz mittels einer Phasenbeziehung zwischen der Spannung im Sekundärkreis 22 und dem Strom im Primärkreis 18 ermittelt werden. Alternativ oder zusätzlich wird zum Ermitteln der Resonanzfrequenz die Frequenz in einem Frequenzbereich um eine erwartete Frequenz variiert und die Frequenz als Resonanzfrequenz ermittelt, bei welcher die Wechselspannungsamplitude des Schwingkreises bzw. Sekundärkreises maximal wird. Der Resonanzabgleich erfolgt dabei nach einer Abtrennung des Amplitudenregelkreises bzw. bei ausgesetzter automatischer Nachregelung der Amplitude. Alternativ oder zusätzlich wird die Resonanzfrequenz durch Feststellung der maximalen Wechselstromamplitude im Primärkreis ermittelt. Dabei kann die automatische Amplitudenregelung entweder aussetzen oder weiter arbeiten.

Die Frequenznachregelmittel 46 wirken als Abstimmer bzw. Tuner für den Synthesizer 34 und sind vorzugsweise in einer Anwendungsfeld programmierbaren Anordnung von Logikgattern bzw. einem sog. "Field Programmable Gate Array (FPGA)-Block" implementiert. Die Frequenznachregelmittel 46 erkennen anhand der Phaseninformationen des Stroms im Primärkreis 18 und der Spannung im Sekundärkreis 22 eine etwaige Verstimmung des Sekundärkreises 22 bzw. ob der Primärkreis 18 auf Resonanz zum Sekundärkreis 22 abgestimmt ist. In dem Fall, dass ein Maximalwert der Wechselspannung im Sekundärkreis 22 mit einem Minimalwert des Wechselstroms im Primärkreis 18 zusammenfällt, wird die aktuell vom Synthesizer 34 erzeugte Frequenz als Resonanzfrequenz erkannt. Diese Frequenz und somit auch die Frequenz im Primärkreis 18 werden deshalb beibehalten. Ein entsprechender Stellwert wird über eine Datenleitung 48 hierfür an den Synthesizer 34 übermittelt. Wenn hingegen der Maximalwert der Wechselspannung dem Minimalwert des Wechselstroms um mehr als einen vorbestimmten Phasenverschiebungswert vorauseilt, wird die Frequenz erhöht. In dem Fall, dass der Minimalwert des Wechselstroms dem Maximalwert der Wechselspannung um mehr als einen vorbestimmten Phasenverschiebungswert vorauseilt, wird die Frequenz erniedrigt. Dadurch wird schon bei minimaler Verstimmung des Sekundärkreises der Primärkreis 18 wieder auf Resonanz zum Sekundärkreis 22 abgestimmt.

Ein eingestellter Frequenzwert sowie Informationen über ein fehlgeschlagenes oder erfolgreiches Abstimmen auf Resonanzfrequenz werden über Datenleitungen 50, 52 und 54 an eine von den Wechselspannungsbereitstellungsmitteln 14 umfasste Datenschnittstelle 56 übertragen. Die Datenschnittstelle 56 ist mit dem Synthesizer 34 synchronisiert, wobei sowohl die Datenschnittstelle 56 als auch der Synthesizer 34 ein Signal mit einer Frequenz von bspw. 50 MHz von einem Taktgeber 58 über Signalleitungen 60 und 62 empfangen. Über eine bidirektionale Datenleitung 64, die zur galvanischen Trennung bspw. optisch realisiert sein kann, ist die Datenschnittstelle 56 mit einer übergeordneten Steuereinheit oder Regeleinheit verbunden. Über diese Datenleitung 62 kann der Datenschnittstelle 56 daher mitgeteilt werden, dass eine Messung mit dem Quadrupolmassenspektrometer vorgenommen werden soll. In diesem Fall sendet die Datenschnittstelle 56 über eine Datenleitung 66 ein Signal an die Frequenznachregelmittel 46, welche in Erwiderung auf dieses Signal, entweder solange dieses Signal vorliegt oder bis ein auflösendes Signal erhalten wird, ein Nachregeln der Frequenz im Primärkreis 18 unterbindet. Während der Messung wird die Frequenz jedoch weiterhin quarzgenau gehalten, so dass während üblicher Messzeiten der Resonanzfall im Wesentlichen aufrechterhalten bleibt.

Der HF-Spannungs-Generator 8 weist ferner Digital-Analog (D/A)-Wandler 68, 70 und 72 auf, über welche die Spannungsversorgungen 28, 30 und 32 in Erwiderung auf bei den D/A-Wandlern 68, 70 und 72 eingehenden digitalen Signalen analog angesteuert werden. Über eine Signalleitung 74 wird der D/A-Wandler 72 über die Datenschnittstelle 56 eingeschaltet oder ausgeschaltet. Digitale Eingangssignale, gemäß denen Spannungen an den Spannungsversorgungen 28, 30 und 32 eingestellt werden, erhalten die D/A-Wandler 68, 70 und 72 über Datenleitungen 76, 78 und 80 von der Rechenvorrichtung 12.

Die Rechenvorrichtung 12 ermittelt einzustellende Spannungswerte für die Amplitude der Wechselspannung im Primärkreis 18 und für die Gleichspannungsanteile der HF-Wechselspannung im Sekundärkreis 22 vollständig digital anhand von Werten, welche die Rechenvorrichtung 12 über Datenleitungen 82 und 84 über die Datenschnittstelle 56 sowie über Datenleitungen 86 und 88 von der HF-Spannungs-Messeinrichtung 10 erhält. Insbesondere werden über die Datenleitung 82 ein Soll-HF-Spannungswert der HF-Wechselspannung im Sekundärkreis 22 sowie die aktuell mittels der Frequenznachregelmittel 46 eingestellte Frequenz am Synthesizer 34 an die Rechenvorrichtung 12 übermittelt. Ggf. werden zusätzliche Informationen über den Stabradius r bzw. den Feldradius r₀ über die Datenleitung 82 übermittelt. Die über die Datenleitung 82 übermittelten Daten bzw. Informationen werden in einer digitalen DPID-Regelung zusammen mit Ist-HF-Spannungswerten verarbeitet, welche über die Datenleitungen 86 und 88 an der Rechenvorrichtung eingehen.

Die DPID-Regelung 90 weist zwei Differenziererglieder 92 und 94, ein Proportionalglied 96, das für eine proportionalen Anteil der Verstärkung sorgt, und ein integrierendes Regelglied 98 auf. Die DPID-Regelung 90 verarbeitet tatsächliche Ist- bzw. Soll-Spannungswerte und liefert über die Datenleitung 80 und über den D/A-Wandler 72 einen Wechselspannungsamplitudeneinstellwert an die HF-Wechselspannungsamplitudenbereitstellungsmittel, insbesondere an die Spannungsversorgung 32, welche über die Leistungsstufe 16 den Betrag der Wechselspannung im Primärkreis 18 bestimmt und dadurch auch den Betrag der HF-Wechselspannung im Sekundärkreis 22 beeinflusst.

Als Besonderheit verarbeitet die DPID-Regelung auch die eingestellte Frequenz im Primärkreis 18, wobei etwaige Auswirkungen einer Frequenzänderung im Primärkreis 18 auf den Betrag der HF-Wechselspannungsamplitude im Sekundärkreis 22 berechnet werden können und folglich eine Kompensation über den Wechselspannungsamplitudeneinstellwert berechnet und eingestellt werden kann, bevor es tatsächlich zu einer, insbesondere größeren, Abweichung des Ist-HF-Spannungswerts vom Soll-HF-Spannungswert kommt.

Die Rechenvorrichtung 12 verwendet bekannte Wirkzusammenhänge im Sekundärkreis, insbesondere gemäß den bekannten Formeln von Paul, zur Berechnung des Wechselspannungsamplitudeneinstellwerts in Abhängigkeit von, bspw. über die Geometrie der Quadrupolanordnung 2, einstellbaren Parametern und/oder Regelparametern, insbesondere den Messwerten der HF-Wechselspannungsamplitude im Sekundärkreis 22, zur Berechnung des Wechselspannungsamplitudeneinstellwerts bzw. zur Berechnung von zwei Gleichspannungsamplitudeneinstellwerten, die über die Datenleitungen 76 und 78 zur Einstellung des der HF-Wechselspannung im Sekundärkreis 22 überlagerten Gleichspannungsanteils bereitgestellt werden. Zur Berechnung der Gleichspannungsamplitudenwerte zieht die Rechenvorrichtung 12 getrennt über die Datenleitungen 86 und 88 bezogene Ist-HF-Spannungswerte jeweils in Verbindung mit Werten, die über die Datenleitung 84 von der Datenschnittstelle 56 bezogen werden, heran.

Die Rechenvorrichtung 12 stellt den Wechselspannungsamplitudeneinstellwert und den Gleichspannungsamplitudeneinstellwert derart ein, dass das Verhältnis der HF-Wechselspannungsamplitude im Sekundärkreis 22 zur überlagerten Gleichspannungsamplitude konstant gehalten wird. Ferner sorgt die Rechenvorrichtung 12 dafür, dass sich eine Skalierung einer Massenskala trotz einer Frequenzänderung nicht oder im Wesentlichen nicht ändert.

Die HF-Spannungs-Messeinrichtung 10 weist als Abtastmittel einen HF-Spannungsteiler 100 auf, der als kapazitiver Doppelteiler ausgebildet ist. Mittels Kapazitäten C4, C5, C6 und C7 werden Spannungen im Sekundärkreis 22 abgegriffen und über elektrische Leiter 102 und 104 sowie über zwischengeschaltete Impedanzwandler 106 und 108 bzw. Puffer und elektrische Leiter 110 und 112 an Analog-Digital (A/D)-Wandler 114 und 116 geleitet, die in Erwiderung auf die abgegriffenen Spannungen digitale Spannungswerte erzeugen. Die digitalen Spannungswerte werden Messwertbestimmungsmitteln 118 der HF-Spannungs-Messvorrichtung 10 bereitgestellt, welche wiederum einen Datenspeicher 120 zum Zwischenspeichern eingehender Werte und Amplitudenbestimmungsmittel 122 zum Bestimmen von digitalen Messwerten der Amplitude der HF-Wechselspannung aufweisen. Wie die Frequenznachregelmittel 46 sind auch die Messwertbestimmungsmittel 118, die Rechenvorrichtung 12 und die Datenschnittstelle 56 mittels einer Anwendungsfeld programmierbaren Anordnung von Logikgattern bzw. mittels eines "Field programmable gate array (FPGA)-Blocks" realisiert. Es können dabei mehrere FPGAs oder ein gemeinsames FPGA vorgesehen sein.

Die Messwertbestimmungsmittel 118 bilden zusammen mit den A/D-Wandlern 114 und 116 einen oder zwei A/D-Wandler mit Unterabtastung. Eine Abtastfrequenz f_{CLK} wird dabei von der mittels der Frequenznachregelmittel 46 eingestellten Frequenz f_{IN} abgeleitet. Diese Frequenz wird dem A/D-Wandler 114 bzw. 116 daher über eine nicht dargestellte Datenleitung digital zugeleitet. Dadurch ergibt sich eine konstant bleibende numerisch vorliegende Zwischenfrequenz f_{ZF}, so dass pro Amplitude eine gleichbleibende Anzahl von Messwerten bereitgestellt wird. Die Abtastfrequenz f_{CLK} muss dabei f_{IN}-2f_{ZF} betragen.

Die Messwertbestimmungsmittel 118 bewirken ein Gleichrichten abgetasteter Werte auf numerischer Ebene, das jedoch wahlweise auch entfallen kann. Der digitale Messwert bzw. die digitalen Messwerte, die über die Datenleitungen 86 und 88 der Rechenvorrichtung 12 bereitgestellt werden, werden schließlich aus Spitzenwerten oder alternativ aus absolut vorliegenden Werten der im Datenspeicher 120 vorliegenden Abtastwerte gewonnen.

Die rein digitale Verarbeitung des digitalen Heruntermischens auf eine Zwischenfrequenz verbunden mit der DPID-Regelung 90 der Rechenvorrichtung 12 erlaubt eine leichte Anpassung von Regelparametern an die komplizierte Regelstrecke zur Amplitudenregelung der Wechselspannung im Primärkreis 18.

Das HF-Spannungs-Versorgungssystem 1 weist mittels der Frequenznachregelmittel 46 Frequenzbereitstellungsmittel auf, mittels denen die über die Datenleitung 48 am Synthesizer 34 aktuell eingestellte Frequenz digital auch über die Datenleitung 50, über die Datenschnittstelle 56 und über die Datenleitung 82 sowie ggf. über die Datenleitung 84 digital der Rechenvorrichtung 12 bereitgestellt werden kann. Die Rechenvorrichtung 12 zieht diese Frequenz dabei für die Berechnung des Wechselspannungsamplitudeneinstellwerts und ggf. für die Berechnung des HF-Gleichspannungsamplitudeneinstellwerts heran.

Die Rechenvorrichtung 12 kann eine Hardware sein, auf der die Funktionalität der Rechenvorrichtung 12, insbesondere die DPID-Regelung 90, mittels eines Computerprogrammprodukts 124 bereitgestellt wird. Das Computerprogrammprodukt 124 stellt dabei Regeln bereit, gemäß denen aus Messwerten sowie ggf. gespeicherten Konstanten und/oder Variablen die Daten zur Ansteuerung der A/D-Wandler 68, 70 und 72 über die Datenleitungen 76, 78 und 80 erzeugt und bereitgestellt werden.

Fig. 2 zeigt ein vereinfachtes Blockdiagramm zur ergänzenden Veranschaulichung der wichtigsten Verfahrensschritte eines mittels des HF-Spannungs-Versorgungssystems 1 von Fig. 1 durchführbaren HF-Spannungs-Versorgungsverfahrens 130. Das HF-Spannungs-Versorgungsverfahren 130 umfasst ein HF-Spannungs-Erzeugungsverfahren 132, welches alle Verfahrensschritte umfasst, die mittels des HF-Spannungs-Generators 8 von Fig. 1 durchführbar sind. Ferner umfasst das HF-Spannungs-Versorgungsverfahren 130 ein HF-Spannungs-Messverfahren 134, welches alle Verfahrensschritte umfasst, die mit der HF-Spannungs-Messvorrichtung 10 von Fig. 1 durchführ sind. Schließlich umfasst das HF-Spannungs-Versorgungsverfahren 130 noch ein Rechenverfahren 136, welche alle Verfahrensschritte umfasst, die mit der Rechenvorrichtung 12 von Fig. 1 bzw. mittels des Softwareprogrammprodukts 124 durchführbar sind.

Der HF-Spannungs-Generator 8 erzeugt mittels des HF-Spannungs-Erzeugungsverfahrens 132 die bereits in der Beschreibung zu Fig. 1 genannte und noch nicht bezeichnete Wechselspannung 138 im Primärkreis 18. Mittels magnetischer Kopplung 140 bzw. mittels der Spulen 20, 24 und 26 werden der Primärkreis 18 und der Sekundärkreis 22, insbesondere auf Resonanz, miteinander gekoppelt. Im Sekundärkreis 22 wird somit die bereits genannte und noch nicht bezeichnete HF-Wechselspannung 142 erzeugt. Diese HF-Wechselspannung 142 versorgt die Quadrupolanordnung 2, wird jedoch auch von der HF-Spannungs-Messvorrichtung 10 abgegriffen und somit dem HF-Spannungs-Messverfahren 134 zugeleitet. Es folgt ein Herunterteilen 144 der HF-Wechselspannung 142 auf eine Teilspannung 146. Gemäß der Beschreibung zur HF-Spannungs-Messvorrichtung 10 in Fig. 1 werden mittels des HF-Spannungs-Messverfahrens 134 schließlich Ist-HF-Spannungswerte 148, welche den Spannungen an den Elektrodenpaaren 4 und 4" bzw. 4' und 4"' zugeordnet sind, erzeugt und dem Rechenverfahren 136 bzw. der Rechenvorrichtung 12 zugeleitet. Das HF-Spannungs-Messverfahren 134 führt ggf. zuvor ein numerisches Gleichrichten der Ist-HF-Spannungswerte 148 bzw. von Werten, auf welche die Ist-HF-Spannungswerte 148 zurückgehen, durch.

Das Rechenverfahren 136 verwendet für eine Spannungsregelung als weitere Eingangsgrößen einen Soll-HF-Spannungswert 150, der von der Datenschnittstelle 56 bereitgestellt wird, und den ebenfalls schon genannten und noch nicht bezeichneten Frequenzwert 152 ebenfalls über die Datenschnittstelle 56, so dass das Rechenverfahren 136 den Frequenzwert 152 für seine Berechnungen heranziehen kann. Ggf. werden nicht der Soll-HF-Spannungswert 150 bzw. der Frequenzwert 152 direkt übertragen, sondern es werden Größen übermittelt, deren Betrag vom Soll-HF-Spannungswert 150 und/oder Frequenzwert 152 abhängig sind bzw. den Soll-HF-Spannungswert 150 und/oder Frequenzwert 152 enthalten.

Das Rechenverfahren 136 berechnet über die DPID-Regelung 90 den schon genannten und noch nicht bezeichneten digitalen Wechselspannungsamplitudeneinstellwert 154 und stellt ihn dem HF-Spannungs-Erzeugungsverfahren zur Nachregelung der Wechselspannungsamplitude bereit. Ferner berechnet das Rechenverfahren 136 den schon genannten und noch nicht bezeichneten digitalen Gleichspannungsamplitudeneinstellwert 156, welcher ein Paar von Werten für eine positive und eine negative Gleichspannungsamplitude für das erste Elektrodenpaar 4 und 4" und bzw. das zweite Elektrodenpaar 4' und 4"' umfasst.

Insgesamt ermöglicht die Erfindung eine stabile und präzise Spannungsversorgung mit einer hochfrequenten Wechselspannung für die Quadrupolanordnung 2 eines Quadrupolmassenspektrometers oder alternativ für eine Multipolanordnung eines anderen, nicht gezeigten Multipolmassenspektrometers.

## Patentansprüche

1. Hochfrequenz (HF)-Spannungs-Versorgungssystem zur Versorgung eines Multipolmassenspektrometers, insbesondere Quadrupolmassenspektrometers, mit einer zur Erzeugung eines Multipolfeldes, insbesondere Quadrupolfeldes (6), verwendeten HF-Wechselspannung (142) in einem mittels eines Primärkreises (18) angeregten Sekundärkreis (22), aufweisend
a) einen HF-Spannungs-Generator (8) mit einem Synthesizer (34) ausgebildet zum quarzgenauen Einstellen und Halten der Frequenz einer Wechselspannung (138) im Primärkreis (18) gemäß einem jeweiligen Frequenzwert (152), wobei der HF-Spannungs-Generator (8) Frequenznachregelmittel (46) aufweist, ausgebildet zum Ermitteln des Resonanzfalls des Sekundärkreises (22) oder einer Abweichung vom Resonanzfall und zum automatischen Nachregeln der Frequenz der Wechselspannung (138) im Primärkreis (18) im Falle einer Abweichung vom Resonanzfall derart, dass der Resonanzfall wiederhergestellt wird und somit der Sekundärkreis (22) durch Nachregelung der Frequenz der Wechselspannung (138) im Primärkreis (18) auf Resonanz gehalten wird,
b) Frequenzbereitstellungsmittel ausgebildet zum digitalen Bereitstellen des aktuell am Synthesizer (34) eingestellten Frequenzwertes (152) an eine Rechenvorrichtung (12),
c) eine als Digital-Spannungsmessgerät ausgebildete HF-Spannungs-Messvorrichtung (10) zum Abtasten der HF-Wechselspannung (142) im Sekundärkreis (22) und zum digitalen Ermitteln eines von dieser HF-Wechselspannung (142) abhängigen digitalen Messwertes als Ist-HF-Spannungswert (148),
d) wobei die Rechenvorrichtung (12) ausgebildet ist zum Berechnen eines digitalen Wechselspannungsamplitudeneinstellwertes (154) in Abhängigkeit von
(i) dem Ist-HF-Spannungswert (148),
(ii) einem einer zu detektierenden Masse zugeordneten Soll-HF-Spannungswert (150),
(iii) dem aktuell am Synthesizer (34) eingestellten, der Rechenvorrichtung (12) bereitgestellten Frequenzwert (152) der Wechselspannung (138) im Primärkreis (18) und
(iv) vom Stabradius (r) einer stabförmigen Elektrode (4, 4', 4", 4"') des Multipolmassenspektrometers oder vom Feldradius (r₀) des Multipolfeldes
in Erwiderung auf eine - sich durch das automatische Nachregeln der Frequenz einstellende - Frequenzänderung der Wechselspannung (138) im Primärkreis (18) und zum Bereitstellen des Wechselspannungsamplitudeneinstellwertes (154) an den HF-Spannungs-Generator (8) zum Einstellen der Amplitude der Wechselspannung (138) im Primärkreis (18) und
e) wobei der HF-Spannungs-Generator (8) ausgebildet ist zum mittelbaren Nachregeln der HF-Wechselspannung (142) im Sekundärkreis (22) mit einer in Abhängigkeit vom Wechselspannungsamplitudeneinstellwert (154) nachgeregelten HF-Wechselspannungsamplitude durch Einstellen der Amplitude der Wechselspannung (138) im Primärkreis (18).

2. Hochfrequenz (HF)-Spannungs-Versorgungssystem nach Anspruch 1,
**dadurch gekennzeichnet, dass**
die HF-Spannungs-Messvorrichtung (10) einen als kapazitiver Doppelteiler ausgebildeten HF-Spannungsteiler (100) als Abtastmittel aufweist, mittels dem die abgetastete HF-Wechselspannung (142) von einer überlagerten Gleichspannung getrennt und auf eine niedrigere, direkt messbare Teilspannung (146), bevorzugt in einem Verhältnis zwischen 100:1 und 1000:1 heruntergeteilt wird, wobei die abgetastete HF-Wechselspannung (142) in einem ersten Schritt in einem ersten Verhältnis, bevorzugt in einem Verhältnis zwischen 25:1 und 35:1, besonders bevorzugt 30:1, und in einem zweiten Schritt in einem zweiten Verhältnis, bevorzugt in einem Verhältnis zwischen 25:1 und 35:1, besonders bevorzugt 30:1, heruntergeteilt wird.

3. Hochfrequenz (HF-)Spannungs-Versorgungssystem nach einem der vorherigen Ansprüche, insbesondere nach Anspruch 2,
**dadurch gekennzeichnet, dass**
die HF-Spannungs-Messvorrichtung (10) einen Analog-Digital-Wandler (114) umfasst, mittels dem, insbesondere aus der Teilspannung (146), der digitale Messwert bestimmbar wird, und
dass mittels Messwertbestimmungsmitteln (118) ein Abtasttakt in einem festen Verhältnis zur Frequenz der HF-Wechselspannung (142) im Sekundärkreis (22) gehalten wird.

4. Hochfrequenz (HF)-Spannungs-Versorgungssystem nach einem der vorherigen Ansprüche,
**dadurch gekennzeichnet, dass**
die Rechenvorrichtung (12) als DPID-Regelung (90) ausgebildete Stellwertbestimmungsmittel aufweist, mittels denen der digitale Wechselspannungsamplitudeneinstellwert (154) bestimmt wird.

5. Hochfrequenz (HF)-Spannungs-Versorgungssystem nach einem der vorherigen Ansprüche,
**dadurch gekennzeichnet, dass**
die Rechenvorrichtung (12) derart ausgebildet ist, dass in Abhängigkeit vom Ist-HF-Spannungswert (148), vom Soll-HF-Spannungswert (150), vom aktuell am Synthesizer (34) eingestellten, digital der Rechenvorrichtung (12) bereitgestellten Frequenzwert (152) der Wechselspannung (138) im Primärkreis (18) und vom Stabradius (r) einer stabförmigen Elektrode (4, 4', 4", 4"') des Multipolmassenspektrometers oder vom Feldradius (r₀) des Multipolfeldes (6) zusätzlich ein digitaler Gleichspannungsamplitudeneinstellwert (156) zum Einstellen der Gleichspannungsamplitude einer der HF-Wechselspannung (142) im Sekundärkreis (22) überlagerten Gleichspannung ermittelt wird.

6. Hochfrequenz (HF)-Spannungs-Versorgungssystem nach einem der vorherigen Ansprüche, insbesondere nach Anspruch 5,
**dadurch gekennzeichnet, dass**
die Rechenvorrichtung (12) derart ausgebildet ist, dass die mittels des Wechselspannungsamplitudeneinstellwerts (154) eingestellte Wechselspannungsamplitude im Primärkreis (18) und/oder die mittels des Gleichspannungsamplitudeneinstellwerts (156) eingestellte Gleichspannungsamplitude im Sekundärkreis (22) mittels bekannter Wirkzusammenhänge im Multipolmassenspektrometer, insbesondere nach den Formeln von Paul, berechnet wird.

7. Hochfrequenz (HF)-Spannungs-Versorgungssystem nach einem der vorherigen Ansprüche,
**dadurch gekennzeichnet, dass**
der Resonanzabgleich während einer Messung mit dem Multipolmassenspektrometer automatisch ausgesetzt wird.

8. Hochfrequenz (HF)-Spannungs-Versorgungssystem nach einem der Ansprüche 1 bis 6,
**dadurch gekennzeichnet, dass**
der HF-Spannungs-Generator (8) Amplitudendetektionsmittel aufweist, mittels denen für verschiedene in einem um eine erwartete Resonanzfrequenz herum definierten Frequenzbereich liegende Frequenzen eine Wechselspannungsamplitude des Sekundärkreises (22) und/oder eine Wechselstromamplitude des Primärkreises (18) ermittelt wird, wobei die Frequenznachregelmittel (46) derart ausgebildet sind, dass sie die Frequenz als Resonanzfrequenz erkennen und speichern, bei welcher die Wechselspannungsamplitude oder Wechselstromamplitude maximal ist.

9. Hochfrequenz (HF)-Spannungs-Versorgungssystem nach einem der Ansprüche 1 bis 6,
**dadurch gekennzeichnet, dass**
der (HF)-Spannungs-Generator (8) Phasendetektionsmittel (38) aufweist, mittels denen eine Phasenbeziehung zwischen der Wechselspannung (142) im Sekundärkreis (22) und dem Wechselstrom im Primärkreis (18) und/oder dem Wechselstrom im Sekundärkreis (22) für verschiedene in einem um eine erwartete Resonanzfrequenz herum definierten Frequenzbereich liegende Frequenzen ermittelt wird, wobei die Frequenznachregelmittel (46) derart ausgebildet sind, dass in dem Fall, dass eine Phasenbeziehung zwischen der Wechselspannung (142) im Sekundärkreis (22) und dem Wechselstrom im Primärkreis (18) von 90° ermittelt wird und/oder eine Phasenbeziehung zwischen der Wechselspannung (142) im Sekundärkreis (22) und dem Wechselstrom im Sekundärkreis (22) von 0° ermittelt wird, die jeweilige Frequenz als Resonanzfrequenz erkannt wird und andernfalls, wenn eine um mehr als einen vorbestimmten Phasenverschiebungswert jeweils abweichende Phasenverschiebung ermittelt wird, aus dieser Phasenverschiebung eine Abstimmungsrichtung ermittelt und die Frequenz der Wechselspannung (138) im Primärkreis (18) gemäß dieser Abstimmungsrichtung erniedrigt oder erhöht wird.

10. Hochfrequenz (HF)-Spannungs-Versorgungsverfahren für die Versorgung eines Multipolmassenspektrometers, insbesondere Quadrupolmassenspektrometers, mit einer zur Erzeugung eines Multipolfeldes, insbesondere Quadrupolfeldes (6), verwendeten HF-Wechselspannung (142) in einem mittels eines Primärkreises (18) angeregten Sekundärkreis (22), wobei
a) ein Synthesizer (34) eines HF-Spannungs-Generators (8) mittels eines HF-Spannungs-Erzeugungsverfahrens die Frequenz einer Wechselspannung (138) im Primärkreis (18) gemäß einem jeweiligen Frequenzwert (152) quarzgenau einstellt und hält, wobei Frequenznachregelmittel (46) des HF-Spannungs-Generators (8) den Resonanzfall des Sekundärkreises (22) oder eine Abweichung vom Resonanzfall ermitteln und im Falle einer Abweichung vom Resonanzfall die Frequenz der Wechselspannung (138) im Primärkreis (18) automatisch derart nachregeln, dass der Resonanzfall wiederhergestellt wird, und somit durch Nachregeln der Frequenz der Wechselspannung (138) im Primärkreis (18) den Sekundärkreis auf Resonanz halten,
b) mittels Frequenzbereitstellungsmitteln der aktuell am Synthesizer (34) eingestellte Frequenzwert (152) der Wechselspannung (138) im Primärkreis (18) digital einer Rechenvorrichtung (12) bereitgestellt wird,
c) eine als Digital-Spannungsmessgerät ausgebildete HF-Spannungs-Messvorrichtung (10) die HF-Wechselspannung (142) im Sekundärkreis (22) abtastet und einen von dieser HF-Wechselspannung (142) abhängigen digitalen Messwert als absoluten Ist-HF-Spannungswert (148) digital ermittelt,
d) die Rechenvorrichtung (12) in Erwiderung auf eine - sich durch das automatische Nachregeln der Frequenz einstellende - Frequenzänderung der Wechselspannung (138) im Primärkreis (18) mittels eines Rechenverfahrens (136) einen digitalen Wechselspannungsamplitudeneinstellwert (154) in Abhängigkeit von
(i) dem Ist-HF-Spannungswert (148),
(ii) einem einer zu detektierenden Masse zugeordneten Soll-HF-Spannungswert (150),
(iii) dem aktuell am Synthesizer (34) eingestellten, der Rechenvorrichtung (12) bereitgestellten Frequenzwert (152) der Wechselspannung (138) im Primärkreis (18), sowie
(iv) vom Stabradius (r) einer stabförmigen Elektrode (4. 4', 4", 4"') des Multipolmassenspektrometers oder vom Feldradius (r₀) des Multipolfeldes
berechnet und dem HF-Spannungs-Generator (8) zum Einstellen der Amplitude der Wechselspannung (138) im Primärkreis (18) bereitstellt und
e) der HF-Spannungs-Generator (8) durch Einstellen der Amplitude der Wechselspannung (138) im Primärkreis (18) mittelbar die HF-Wechselspannung (142) im Sekundärkreis (22) mit einer in Abhängigkeit vom Wechselspannungsamplitudeneinstellwert (154) eingestellten HF-Wechselspannungsamplitude nachregelt.

11. Hochfrequenz (HF)-Spannungs-Versorgungsverfahren nach Anspruch 10,
**dadurch gekennzeichnet, dass**
Amplitudendetektionsmittel des HF-Spannungs-Generators (8) für verschiedene in einem um eine erwartete Resonanzfrequenz herum definierten Frequenzbereich liegende Frequenzen eine Wechselspannungsamplitude des Sekundärkreises (22) und/oder eine Wechselstromamplitude des Primärkreises (18) ermitteln und die Frequenznachregelmittel (46) die Frequenz als Resonanzfrequenz erkennen und speichern, bei welcher die Wechselspannungsamplitude oder Wechselstromamplitude maximal ist.

12. Hochfrequenz (HF)- Spannungs-Versorgungsverfahren nach Anspruch 10,
**dadurch gekennzeichnet, dass**
der HF-Spannungs-Generator (8) Phasendetektionsmittel (38) aufweist, welche eine Phasenbeziehung zwischen der Wechselspannung (142) im Sekundärkreis (22) und dem Wechselstrom im Primärkreis (18) und/oder dem Wechselstrom im Sekundärkreis (22) ermitteln, wobei der HF-Spannungs-Generator (8) in dem Fall, dass eine Phasenbeziehung zwischen der Wechselspannung (142) im Sekundärkreis (22) und dem Wechselstrom im Primärkreis (18) von 90° ermittelt wird und/oder eine Phasenbeziehung zwischen der Wechselspannung (142) im Sekundärkreis (22) und dem Wechselstrom im Sekundärkreis (22) von 0° ermittelt wird, die jeweilige Frequenz als Resonanzfrequenz erkennt und andernfalls, wenn eine um mehr als einen vorbestimmten Phasenverschiebungswert jeweils abweichende Phasenverschiebung ermittelt wird, aus dieser Phasenverschiebung eine Abstimmungsrichtung ermittelt und die Frequenz der Wechselspannung (138) im Primärkreis (18) gemäß dieser Abstimmungsrichtung erniedrigt oder erhöht.

## Claims

1. A high-frequency (HF) voltage supply system for supplying a multipole mass spectrometer, in particular a quadrupole mass spectrometer, with an HF AC voltage (142) used to generate a multipole field, in particular a quadrupole field (6), in a secondary circuit (22) excited by means of a primary circuit (18), comprising
a) an HF voltage generator (8) with a synthesizer (34) being implemented for setting with quartz precision and holding the frequency of an AC voltage (138) in the primary circuit (138) according to a frequency value (152), the HF voltage generator (8) comprising frequency readjustment means (46), being implemented for ascertaining the resonance case of the secondary circuit (22) or a deviation from the resonance case and, in case of a deviation from the resonance case, for automatically readjusting the frequency of the AC voltage (138) in the primary circuit (18) in such a manner that the resonance case is reproduced and therefore the secondary circuit (22) is held at resonance by automatically readjusting the AC voltage (138) in the primary circuit (18) at resonance,
b) frequency provision means for digitally providing the actual frequency value (152), currently set on the synthesizer (34), to a computing device (12),
c) HF voltage supply system (10) being implemented as a digital voltage meter for sampling the HF AC voltage (142) in the secondary circuit (22) and for digitally ascertaining a digital measured value, which is a function of this HF AC voltage (142), as the actual HF voltage (148),
d) whereas the computing device (12) is implemented for calculating a digital AC voltage amplitude setting value (154) as a function of
(i) the actual HF voltage value (148),
(ii) a target HF voltage value assigned to a mass to be detected (150),
(iii) the frequency value (152) of the AC voltage (138) in the primary circuit (18) currently set at the synthesizer (34) provided for the computing device (12), and
(iv) the rod radius (r) of a rod-shaped electrode (4, 4', 4", 4"') of the multipole mass spectrometer or of the field radius (r₀) of the multipole field,
in response to a frequency change of the AC voltage (138) in the primary circuit (18) set by the automatic readjustment of the frequency and for providing the AC voltage amplitude setting value (154) at the HF voltage generator to set the amplitude of the AC voltage (138) in the primary circuit (18) and
e) the HF voltage generator (8) being implemented for indirectly readjusting the HF AC voltage (142) in the secondary circuit (22) with a readjusted HF voltage amplitude, as a function of the AC voltage amplitude setting value (154), by setting the amplitude of the AC voltage (138) in the primary circuit (18).

2. The high-frequency (HF) voltage supply system according to Claim 1,
**characterized in that**
the HF voltage measuring device (10) comprises an HF voltage divider (100), implemented as a capacitive double divider, as the sampling means, by means of which the sampled HF AC voltage (142) is seperated from a superimposed AC voltage and is divided down to a lower, directly measurable subvoltage (146), preferably in a ratio between 100:1 and 1000:1, the sampled HF AC voltage (142) is divided down in a first step in a first ratio, preferably in a ratio between 25:1 and 35:1, particularly preferably 30:1, and in a second step in a second ratio, preferably in a ratio between 25:1 and 35:1, particularly preferably 30:1.

3. The high-frequency (HF) voltage supply system according to one of the preceding claims, in particular according to Claim 2,
**characterized in that**
the HF voltage measuring device (10) comprises an analog-digital converter (114), by means of which the digital measured value can be determined, in particular from the subvoltage (146), and,
by means of the measured value determination means (118), a sampling cycle is held in a fixed ratio to the frequency of the HF AC voltage (142) in the secondary circuit (22).

4. The high-frequency (HF) voltage supply system according to one of the preceding claims,
**characterized in that**
the computing device (12) comprises control value determination means implemented as DPID controller (90), by means of which the digital AC voltage amplitude setting value (154) is determined.

5. The high-frequency (HF) voltage supply system according to one of the preceding claims,
**characterized in that**
the computing device (12) is implemented in such a manner that, as a function of the actual HF voltage value (148), of the target HF voltage value (150), of the frequency value (152) of the AC voltage (138) in the primary circuit (18), actually set at the synthesizer (34) and digitally provided for the computing device (12), and of the rod radius (r) of a rod-shaped electrode (4, 4', 4", 4"') of the multipole mass spectrometer or of the field radius (r₀) of the multipole field (6), a digital DC voltage amplitude setting value (156) for setting the DC voltage amplitude of the DC voltage superimposed on the HF AC voltage (142) in the secondary circuit (22) is additionally ascertained.

6. The high-frequency (HF) voltage supply system according to one of the preceding claims, in particular according to Claim 5,
**characterized in that**
the computing device (12) is implemented in such a manner that the AC voltage amplitude, which is set by means of the AC voltage amplitude setting value (154), in the primary circuit (18) and/or the DC voltage amplitude, which is set by means of the DC voltage amplitude setting value (156), in the secondary circuit (22) is calculated by means of known interactions in the multipole mass spectrometer, in particular according to the formulas of Paul.

7. The high-frequency (HF) voltage supply system according to one of the preceding claims,
**characterized in that**
the resonance adjustment is interrupted automatically during the measurement with the multipole mass spectrometer.

8. The high-frequency (HF) voltage supply system according to one of the claims 1 to 6,
**characterized in that**
the HF voltage generator (8) having amplitude detection means, by means of which, for various frequencies lying in frequency range defined around an expected resonance frequency, an AC voltage amplitude of the secondary circuit (22) and/or an alternating current amplitude of the primary circuit (18) is ascertained, the frequency readjustment means (46) being implemented in such a manner that they recognize and store the frequency as the resonance frequency at which the AC voltage amplitude or the alternating current amplitude is maximal.

9. The high-frequency (HF) voltage supply system according to one of the claims 1 to 6,
**characterized in that**
the HF voltage generator (8) comprises phase detection means (38), by means of which a phase relationship between the AC voltage (142) in the secondary circuit (22) and the alternating current in the primary circuit (18) and/or the alternating current in the secondary circuit (22) is ascertained for various frequencies lying in a frequency range defined around an expected resonance frequency, the frequency readjustment means (46) being implemented in such a manner that in the case in which a phase relationship of 90° between the AC voltage (142) in the secondary circuit (22) and the alternating current in the primary circuit (18) is ascertained and/or a phase relationship of 0° between the AC voltage (142) in the secondary circuit (22) and the alternating current in the secondary circuit (22) is ascertained, the respective frequency is recognized as the resonance frequency and otherwise, if a phase shift deviating respectively by more than a predetermined phase shift value is ascertained, a tuning direction is ascertained from this phase shift and the frequency of the AC voltage (138) in the primary circuit (18) is increased or decreased according to this tuning direction.

10. A high-frequency (HF) voltage supply method for supplying a multipole mass spectrometer, in particular a quadrupole mass spectrometer, with an HF AC voltage (142) used to generate a multipole field, in particular a quadrupole field (6), in a secondary circuit (22) excited by means of a primary circuit (18), in which
a) a synthesizer (34) of an HF voltage generator (8) sets and holds with quartz precision by means of an HF voltage supply method the frequency of an AC voltage in the primary circuit (18) according to a respective frequency value (152), in which frequency readjustment means (46) of the HF voltage generator (8) detect the resonance case of the secondary circuit (22) or a deviation from the resonance case and in the case of a deviation from the resonance case automatically readjust the frequency of the AC voltage (138) in the primary circuit (18) in such a manner that the resonance case is reproduced and therefore hold the secondary circuit (22) in resonance by controlling the frequency of the AC voltage (138) of the primary circuit (18),
b) using frequency readjustment means the frequency value (152) of the AC voltage (138) in the primary circuit (18), currently set on the synthesizer (34), is digitally provided to a computing device (12),
c) an HF voltage measuring device (10) being implemented as a digital voltage meter samples the HF AC voltage (142) in the secondary circuit (22) and digitally ascertains a digital measured value as a function of this HF AC voltage (142) as an absolute value of the actual HF voltage value (148),
d) in response to a frequency change of the AC voltage (138) in the primary circuit (18) set by the automatic readjustment of the frequency, the computing device (12) calculates, by means of a computing method (136), a digital AC voltage amplitude setting value (154) as a function of
(i) the actual HF voltage value (148)
(ii) a target HF voltage value assigned to a mass to be detected (150),
(iii) the frequency value (152) of the AC voltage (138) in the primary circuit (18) currently set at the synthesizer (34) provided for the computing device (12), and
(iv) the rod radius (r) of a rod-shaped electrode (4, 4', 4", 4"') of the multipole mass spectrometer or of the field radius (r₀) of the multipole field
and provides it to the HF voltage generator to set the amplitude of the AC voltage (138) in the primary circuit (18) and
e) the HF voltage generator (8) indirectly readjusts the HF AC voltage (142) in the secondary circuit (22) with a set HF voltage amplitude, as a function of the AC voltage amplitude setting value (154), by setting the amplitude of the AC voltage (138) in the primary circuit (18).

11. The high-frequency (HF) voltage supply method to Claim 10,
**characterized in that**
amplitude detection means of the HF voltage generator (8), for various frequencies lying in a frequency range defined around an expected resonance frequency, ascertain an AC voltage amplitude of the secondary circuit (22) and/or an alternating current amplitude of the primary circuit (18), and the frequency readjustment means (46) recognize and store the frequency, at which the AC voltage amplitude or alternating current amplitude is maximal, as the resonance frequency.

12. The high-frequency (HF) voltage supply method to Claim 10,
**characterized in that**
the HF AC voltage generator (8) comprising phase detection means (38), which ascertain a phase relationship between the AC voltage (142) in the secondary circuit (22) and the alternating current in the primary circuit (18) and/or the alternating current in the secondary circuit (22), the HF voltage generator (8), in the case in which a phase relationship of 90° is ascertained between the AC voltage (142) in the secondary circuit (22) and the alternating current in the primary circuit (18) and/or a phase relationship of 0° is ascertained between the AC voltage (142) in the secondary circuit (22) and the alternating current in the secondary circuit (22), recognizes the respective frequency as the resonance frequency and otherwise, if a respective phase shift deviating by more than a predetermined phase shift value is ascertained, ascertains a tuning direction from this phase shift and decreases or increases the frequency of the AC voltage (138) in the primary circuit (18) according to this tuning direction.

## Revendications

1. Système d'alimentation en tension à haute fréquence (HF) pour l'alimentation d'un spectromètre de masse multipolaire, en particulier d'un spectromètre de masse quadripolaire avec une tension alternative HF (142) utilisée pour générer un champ multipolaire, en particulier un champ quadripolaire (6), dans un circuit secondaire (22) excité au moyen d'un circuit primaire (18), comprenant
a) un générateur de tension HF (8) avec un synthétiseur (34) constitué pour établir et maintenir à une précision de quartz la fréquence d'une tension alternative (138) dans un circuit primaire (18) selon une valeur de fréquence respective (152), le générateur de tension HF (8) comportant un moyen de réajustement de fréquence (46), étant constitué pour déterminer la chute de résonance du circuit secondaire (22) ou un écart de chute de résonance et pour le réajustement automatique de la fréquence de la tension alternative (138) dans le circuit primaire (18) en cas d'écart de chute de résonance de telle manière que la chute de résonance est rétablie et de ce fait le circuit secondaire (22) est maintenu à la résonance par réajustement de la fréquence de tension alternative (138) dans le circuit primaire (18),
b) moyen de production de fréquence constitué pour la production numérique de la valeur de fréquence (152) réglée en réalité sur le synthétiseur (34) sur un dispositif calculateur (12),
c) un dispositif de mesure de tension HF (10) constitué comme appareil de mesure de tension numérique pour détecter la tension alternative HF (142) dans le circuit secondaire (22) et pour la détermination numérique d'une valeur de mesure numérique en fonction de cette tension alternative HF (142) en tant que valeur de tension HF théorique (148),
d) pour lequel le dispositif calculateur (12) est constitué pour calculer une valeur de réglage d'amplitude de tension alternative numérique (154) en fonction
(i) de la valeur de tension HF effective (148),
(ii) d'une valeur de tension HF théorique (150) attribuée à une masse à détecter,
(iii)de la valeur de fréquence (152) de la tension alternative (138) dans le circuit primaire (18) réglée en réalité sur le synthétiseur (34), mise à disposition du dispositif calculateur (12), et
(iv) du rayon de barre (r) d'une électrode en forme de barre (4, 4', 4" , 4"') du spectromètre de masse multipolaire ou du rayon de champ (r₀) du champ multipolaire,
en réponse à une modification de fréquence de la tension alternative (138) dans le circuit primaire (18), s'établissant par le réajustement automatique de la fréquence, et pour la production de la valeur de réglage d'amplitude de tension alternative (154) sur le générateur de tension HF (8) pour régler l'amplitude de la tension alternative (138) dans le circuit primaire (18) et
e) pour lequel le générateur de tension HF (8) est constitué pour le réajustement indirect de la tension alternative HF (142) dans le circuit secondaire (22) avec une amplitude de tension alternative HF réajustée en fonction de la valeur de réglage d'amplitude de tension alternative (154) par réglage de l'amplitude de la tension alternative (138) dans le circuit primaire (18).

2. Système d'alimentation en tension à haute fréquence (HF) selon la revendication 1
**caractérisé en ce que**
le dispositif de mesure de tension HF (10) comporte un diviseur de tension HF (100) constitué comme diviseur double capacitif en tant que moyen de détection, au moyen duquel la tension alternative HF (142) détectée est séparée d'une tension continue superposée et subdivisée en une tension partielle (146) plus faible directement mesurable, de préférence dans un rapport se situant entre 100:1 et 1000:1, la tension alternative HF détectée (142) étant subdivisée dans une première étape dans un premier rapport, de préférence dans un rapport se situant entre 25:1 et 35:1, en particulier de préférence 30:1 et dans une deuxième étape dans un deuxième rapport, de préférence dans un rapport se situant entre 25:1 et 35:1, en particulier de préférence 30:1.

3. Système d'alimentation en tension à haute fréquence (HF) selon l'une quelconque des revendications précédentes, en particulier selon la revendication 2
**caractérisé en ce que**
le dispositif de mesure de tension HF (10) comprend un convertisseur analogique-numérique (114) au moyen duquel, en particulier à partir de la tension partielle (146), la valeur de mesure numérique peut être déterminée, et
**en ce qu'**au moyen de moyens de détermination de la valeur de mesure (118), une cadence de détection est maintenue dans un rapport fixe eu égard à la fréquence de la tension alternative HF (142) dans le circuit secondaire (22).

4. Système d'alimentation en tension à haute fréquence (HF) selon l'une quelconque des revendications précédentes
**caractérisé en ce que**
le dispositif calculateur (12) comporte des moyens de détermination de valeur de réglage constitués comme régulation DPID (90) au moyen desquels la valeur de réglage d'amplitude de tension alternative numérique (154) est déterminée.

5. Système d'alimentation en tension à haute fréquence (HF) selon l'une quelconque des revendications précédentes
**caractérisé en ce que**
le dispositif calculateur (12) est constitué de telle manière qu'une valeur de réglage d'amplitude de tension continue numérique (156) est en plus déterminée pour le réglage de l'amplitude de tension continue d'une tension continue superposée à la tension alternative HF (142) dans le circuit secondaire (22) en fonction de la valeur de tension HF effective (148), de la valeur de tension HF théorique (150), de la valeur de fréquence (152) de la tension alternative (138) dans le circuit primaire (18), réglée en réalité sur le synthétiseur (34), mise de façon numérique à la disposition du dispositif calculateur (12) et en fonction du rayon de barre (r) d' une électrode (4, 4', 4", 4"') en forme de barre du spectromètre de masse multipolaire ou du rayon de champ (r₀) du champ multipolaire (6).

6. Système d'alimentation en tension à haute fréquence (HF) selon l'une quelconque des revendications précédentes, en particulier de la revendication 5,
**caractérisé en ce que**
le dispositif calculateur (12) est constitué de telle manière que l'amplitude de tension alternative dans le circuit primaire (18) réglée au moyen de la valeur de réglage d'amplitude de tension alternative (154) et/ou l'amplitude de tension continue dans le circuit secondaire (22) réglée au moyen de la valeur de réglage d'amplitude de tension continue (156) est calculée au moyen des rapports actifs connus dans le spectromètre de masse multipolaire, en particulier selon la formule de Paul.

7. Système d'alimentation en tension à haute fréquence (HF) selon l'une des revendications précédentes
**caractérisé en ce que**
l'ajustement de la résonance est automatiquement suspendu pendant une mesure avec le spectromètre de masse multipolaire.

8. Système d'alimentation en tension à haute fréquence (HF) selon l'une quelconque des revendications 1 à 6
**caractérisé en ce que**
le générateur de tension HF (8) comporte des moyens de détection d'amplitude au moyen desquels une amplitude de tension alternative du circuit secondaire (22) et/ou une amplitude de courant alternatif du circuit primaire (18) est déterminée pour différentes fréquences se situant dans une gamme de fréquences définie autour d'une fréquence de résonance attendue, les moyens de réajustement de fréquence (46) étant constitués de telle manière qu'ils identifient et mémorisent la fréquence en tant que fréquence de résonance, pour laquelle l'amplitude de tension alternative ou l'amplitude de courant alternatif est maximale.

9. Système d'alimentation en tension à haute fréquence (HF) selon l'une quelconque des revendications 1 à 6
**caractérisé en ce que**
le générateur de tension HF (8) comporte des moyens de détection de phase (38) au moyen desquels un rapport de phase est déterminé entre la tension alternative (142) dans le circuit secondaire (22) et le courant alternatif dans le circuit primaire (18) et/ou le courant alternatif dans le circuit secondaire (22) pour différentes fréquences se situant dans une gamme de fréquences définie autour d'une fréquence de résonance attendue, les moyens de réajustement de fréquence (46) étant constitués de telle manière que dans le cas où un rapport de phase entre la tension alternative (142) dans le circuit secondaire (22) et le courant alternatif dans le circuit primaire (18) est déterminé à 90°, et/ou un rapport de phase entre la tension alternative (142) dans le circuit secondaire (22) et le courant alternatif dans le circuit secondaire (22) est déterminé à 0°, la fréquence respective est identifiée comme fréquence de résonance et autrement, si un déphasage s'écartant respectivement de plus d'une valeur de déphasage prédéterminée est déterminé, une orientation d'adaptation est déterminée à partir de ce déphasage et la fréquence de la tension alternative (138) dans le circuit primaire (18) est diminuée ou augmentée conformément à cette orientation d'adaptation.

10. Procédé d'alimentation en tension à haute fréquence (HF) pour l'alimentation d'un spectromètre de masse multipolaire, en particulier d'un spectromètre de masse quadripolaire avec une tension alternative HF (142) utilisée pour générer un champ multipolaire, en particulier un champ quadripolaire (6), dans un circuit secondaire (22) excité au moyen d'un circuit primaire (18), pour lequel
a) un synthétiseur (34) d'un générateur de tension HF (8) règle et maintient à une précision de quartz la fréquence d'une tension alternative (138) dans le circuit primaire (18) selon une valeur de fréquence respective (152) au moyen d'un procédé de production de tension HF, pour lequel les moyens de réajustement de fréquence (46) du générateur de tension HF (8) déterminent la chute de résonance du circuit secondaire (22) ou un écart de chute de résonance et réajustent automatiquement en cas d'un écart de chute de résonance la fréquence de la tension alternative (138) dans le circuit primaire (18) de telle manière que la chute de résonance est rétablie et maintient de ce fait le circuit secondaire à la résonance par réajustement de la fréquence de la tension alternative (138) dans le circuit primaire (18),
b) la valeur de fréquence (152) de la tension alternative (138) dans le circuit primaire (18) réglée en réalité sur le synthétiseur (34), est mise de manière numérique à disposition d'un dispositif calculateur (12) au moyen des moyens de production de fréquence,
c) un dispositif de mesure de tension HF (10) constitué comme appareil de mesure de tension numérique détecte la tension alternative HF (142) dans le circuit secondaire (22) et détermine de manière numérique une valeur de mesure numérique en fonction de cette tension alternative HF (142) en tant que valeur de tension HF effective absolue (148),
d) le dispositif calculateur (12) en réponse à une modification de fréquence de la tension alternative (138) dans le circuit primaire (18), s'établissant par le réajustement automatique de la fréquence, calcule au moyen d'un procédé de calcul (136) une valeur de réglage d'amplitude de tension alternative numérique (154) en fonction
(i) de la valeur de tension HF effective (148),
(ii) d'une valeur de tension HF théorique (150) attribuée à la masse à détecter,
(iii)de la valeur de fréquence (152) de la tension alternative (138) dans le circuit primaire (18) établie en réalité sur le synthétiseur (34), mise à disposition du dispositif calculateur (12), ainsi que
(iv) du rayon de barre (r) d'une électrode en forme de barre (4, 4', 4", 4"') du spectromètre de masse multipolaire ou d'un rayon de champ (r₀) du champ multipolaire
et la met à disposition du générateur de tension HF (8) pour régler l'amplitude de la tension alternative (138) dans le circuit primaire (18) et
e) le générateur de tension HF (8) réajuste par réglage de l'amplitude de la tension alternative (138) dans le circuit primaire (18) indirectement la tension alternative HF (142) dans le circuit secondaire (22) avec une amplitude de tension alternative HF réglée en fonction de la valeur de réglage d'amplitude de tension alternative (154).

11. Procédé d'alimentation en tension à haute fréquence (HF) selon la revendication 10
**caractérisé en ce que**
des moyens de détection d'amplitude du générateur de tension HF (8) déterminent une amplitude de tension alternative du circuit secondaire (22) et/ou une amplitude de courant alternatif du circuit primaire (18) pour différentes fréquences se situant dans une gamme de fréquences définie autour d'une fréquence de résonance attendue et les moyens de réajustement de fréquence (46) identifient et mémorisent la fréquence en tant que fréquence de résonance, à laquelle l'amplitude de tension alternative ou l'amplitude de courant alternatif est maximale.

12. Procédé d'alimentation en tension à haute fréquence (HF) selon la revendication 10
**caractérisé en ce que**
le générateur de tension HF (8) comporte des moyens de détection de phase (38) qui déterminent un rapport de phase entre la tension alternative (142) dans le circuit secondaire (22) et le courant alternatif dans le circuit primaire (18) et/ou le courant alternatif dans le circuit secondaire (22), pour lequel le générateur de tension HF (8), identifie la fréquence respective en tant que fréquence de résonance, dans le cas où un rapport de phase entre la tension alternative (142) dans le circuit secondaire (22) et le courant alternatif dans le circuit primaire (18) est déterminé à 90° et/ou un rapport de phase entre la tension alternative (142) dans le circuit secondaire (22) et le courant alternatif dans le circuit secondaire (22) est déterminé à 0°, et autrement, détermine une orientation d'adaptation à partir de ce déphasage et diminue ou augmente la fréquence de la tension alternative (138) dans le circuit primaire (18) conformément à cette orientation d'adaptation, si un déphasage s'écartant respectivement de plus d'une valeur de déphasage prédéterminée est déterminé.
